Europäisches Patentamt

**European Patent Office**

**Office européen des brevets**

(11) Veröffentlichungsnummer: **0 105 184**
**B1**

(12) **EUROPÄISCHE PATENTSCHRIFT**

(45) Veröffentlichungstag der Patentschrift:
**13.05.87**

(21) Anmeldenummer: **83108503.0**

(22) Anmeldetag: **29.08.83**

(51) Int. Cl.⁴: **H 04 Q 3/00,** H 04 M 19/00

(54) **Schaltungsanordnung zur Verringerung von Geräuschspannungen aufgrund von Längsströmen.**

(30) Priorität: **31.08.82 DE 3232399**

(43) Veröffentlichungstag der Anmeldung:
**11.04.84 Patentblatt 84/15**

(45) Bekanntmachung des Hinweises auf die Patenterteilung:
**13.05.87 Patentblatt 87/20**

(84) Benannte Vertragsstaaten:
**CH FR GB LI SE**

(56) Entgegenhaltungen:
**ELECTRONIC DESIGN MAGAZINE - TELECOM DESIGN 1980, CONFERENCE FOR TELECOMMUNICATION SYSTEMS DESIGNERS, Seiten 249-294, Melville, US, B. KARASCH u.a.: "A solid state line card using LSI components"**
**ELEKTRONIK, Band 30, Nr. 6, 1981, Seiten 73-79, München, DE, E. SCHMID u.a.: "Integrierte Schaltungen für moderne Vermittlungssysteme"**
**ELECTRONIC DESIGN, Band 28, Nr. 25, 6. Dezember 1980, Seiten 59-65, Rochelle Park, US, V. GODBOLE u.a.: "One-chip codec/filter eases subscriber-line interface"**

(73) Patentinhaber: **Siemens Aktiengesellschaft Berlin und München, Wittelsbacherplatz 2, D-8000 München 2 (DE)**

(72) Erfinder: **Rudolf, Hans-Werner, Dr., Wörthstrasse 17, D-8000 München 80 (DE)**

ACTORUM AG

**Beschreibung**

Die Erfindung betrifft eine Schaltungsanordnung zur Verringerung von Geräuschspannungen, die durch Ströme hervorgerufen werden, die aufgrund von Längsinduktionen auf den Adern einer analogen Teilnehmeranschlussleitung fliessen, die über eine elektrische Schnittstellenschaltung an eine digitale Fernsprechvermittlungsstelle angeschlossen ist, wobei die Schnittstellenschaltung niederohmige Ableitpfade für die Längsströme aufweist, die über durch eine Gleichaktregelschaltung beeinflusste Konstantstromquellen für die Speisung der Teilnehmeranschlussleitung führen, und die ihrerseits durch eine Schutzschaltung gegen Überspannungen geschützt sind, und wobei zwischen der Teilnehmeranschlussleitung und dem Sendezweig der Vermittlungsstelle ein Bandpassfilter liegt.

Die genannten Längsinduktionen können aufgrund von Strömen auf den Teilnehmeranschlussleitungen benachbarten Energieversorgungsleitungen entstehen. Die Stromkreise, in denen diese Längsströme fliessen, umfassen einen in der Schnittstellenschaltung, also amtsseitig gebildeten Ableitwiderstand nach einem Erdpotential führenden Schaltungspunkt, den Erdwiderstand, die Impedanz der Ader-Erde-Kapazität sowie den Widerstand der jeweiligen Leitungsader.

Elektronische Schnittstellenschaltungen sind, wie angedeutet, mit Schutzschaltungen versehen, die verhindern, dass über die Teilnehmeranschlussleitung an sie gelangende Überspannungen, die beispielsweise auf Blitzbeeinflussungen zurückzuführen sind, die in ihnen enthaltenen elektronischen Bauelemente zerstören. Die genannten Längsströme können dazu führen, dass an den Eingängen der Schnittstellenschaltung, an denen die Adern der Teilnehmeranschlussleitung angeschlossen sind, Spannungshübe entstehen, die zum Ansprechen der Schutzschaltung führen und damit eine Übertragungsstörung mit sich bringen.

Bisher bekannte Schaltungskonzepte für Schnittstellenschaltungen (z.B. Zeitschrift «Elektronik», 6/1981, Seite 73 bis 79, insbesondere Seite 76; Electronic Design Magazine – Telecom Design 1980, Conference for Telecom. Systems Designers S. 249–294) sehen, um den Spannungshub am Baustein niedrig zu halten, niederohmige Ableitwiderstände für die Längsströme in der Schnittstellenschaltung vor. Um das gewünschte Widerstandsverhalten zu simulieren, werden dabei die Endverstärker des Bausteins durch eine Gleichtakt-Regelschleife angesteuert. Es wird dabei keine Unterscheidung zwischen dem Fernsprechsprachübertragungsband und den darunter und darüber liegenden Frequenzbereichen gemacht.

Das Bandpassfilter ist dabei so dimensioniert, dass einerseits Signalspannungen mit Frequenzen oberhalb der halben Abtastfrequenz des der Schnittstellenschaltung nachgeschalteten Codierers nicht an diesen gelangen können, und andererseits Netzfrequenzkomponenten unterdrückt werden.

Die Sprachwechselspannung wird auf der Teilnehmerleitung als Differenzspannung übertragen. Sofern die beiden, die Leitungsadern der Teilnehmeranschlussleitung umfassenden Stromkreise, in denen Längsströme fliessen, symmetrisch sind, kompensieren sich deren Wirkungen auf das Nutzsignal. Inbesondere bezüglich der Leitungswiderstände der Teilnehmeranschlussleitung ist es jedoch schwierig bzw. technisch aufwendig, Abweichungen zu vermeiden. In der Praxis treten daher Differenzströme der induzierten Längsströme auf, die zu Potentialdifferenzen an den Leitungsadern der Teilnehmeranschlussleitung führen, die sich den aufgrund der über die Teilnehmeranschlussleitung übertragenen analogen Nutzsignalen ergebenden Differenzspannungen überlagern und als Störgeräusche bemerkbar machen.

Wenn aus den vorgenannten Gründen die Ableitwiderstände für die Längsspannungen niederohmig sind, ist mit entsprechend hohen Längsströmen und bei Unsymmetrien auf der Leitung auch entsprechend hohen Differenzströmen zu rechnen, so dass bei den bekannten Schaltungskonzepten zwar die Einflussnahme der Längsströme auf die Schutzschaltung der Schnittstellenschaltung vermieden ist, dafür aber, bedingt durch das niederohmige Verhalten des Bausteins ein höheres Mass an Störgeräuschen in Kauf zu nehmen ist, das durch strengere Anforderungen bezüglich der Schaltungssymmetrie nicht zu kompensieren ist.

Bekannte Massnahmen, die zur Verringerung der Auswirkungen von Längsströmen dienen (siehe die obengenannte Zeitschrift Electronic Design Magazine) und die in der Anschaltung einer aktiven niederohmigen Impedanz an den Zweidrahtanschlüssen liegen, berücksichtigen die durch die genannten niederohmigen Ableitpfade bedingten Längsstrombeeinflussungen nicht.

Die der Erfindung zugrundeliegende Aufgabe besteht daher darin, eine Schaltungsanordnung anzugeben, die unter den genannten Umständen bezüglich der niederohmigen Ableitpfade eine Verringerung der durch induzierte Längsströme hervorgerufenen Geräuschspannungen bewirkt.

Zur Lösung dieser Aufgabe dient eine Schaltungsanordnung der eingangs genannten Art, die erfindungsgemäss dadurch gekennzeichnet ist, dass die Ableitpfade durch die Gleichtaktregelschaltung derart beeinflusst werden, dass diese nur im unterhalb des Fernsprechübertragungsbandes liegenden Frequenzbereiches niederohmig, in und evtl. über diesem Fernsprechübertragungsband jedoch hochohmig sind, und dass die Dämpfung des Bandpassfilters unterhalb des Fernsprechübertragungsbandes so gross ist, dass in diesem Frequenzbereich auftretende Längsspannungen in ausreichendem Masse unterdrückt werden.

Der Erfindung liegt die Erkenntnis zugrunde, dass Längsspannungen mit relativ hohen Amplituden hauptsächlich bei Frequenzen der Grundwelle und der ersten Oberwellen der auf den Versorgungsleitungen auftretenden Leitungsströme, also bei Frequenzen von $16\,2/3$ Hz, 50 Hz oder 60 Hz, d.h. unterhalb des im Telefonbetrieb übertragenen Sprachbandes von 300 Hz bis 3400 Hz auftreten, Längsspannungen mit Frequenzen, die im Sprachband und darüber liegen, dagegen nicht ausreichen, die Schutzschaltungen ansprechen zu lassen.

Wenn daher erfindungsgemäss in dem Frequenzbereich unterhalb von 300 Hz einerseits eine niederohmige Ableitung der Längsströme vorliegt, andererseits Geräuschspannungen durch ein Filter selektiv unterdrückt werden, sind dort Übertragungsstörungen durch Geräuschbeeinflussungen vermieden. Die Unterdrückung auch von Nutzsignalen durch das genannte Filter, das in diesem Bereich eine höhere Dämpfung aufweist, als sie bisher für notwendig erachtet wurde, wird in diesem Frequenzbereich nicht als störend empfunden.

Andererseits wird die Entstehung von Geräuschspannungen durch Längstöne im Sprachband dadurch reduziert, dass die Längsstromregelung des Bausteines in diesem Frequenzbereich unwirksam wird, der Baustein damit einen hochohmigen Abschluss bildet, wodurch die Widerstandssymmetrie der Adern unwirksam wird.

Nachstehend wird die Erfindung anhand eines Ausführungsbeispiels unter Bezugnahme auf eine Figur noch näher erläutert.

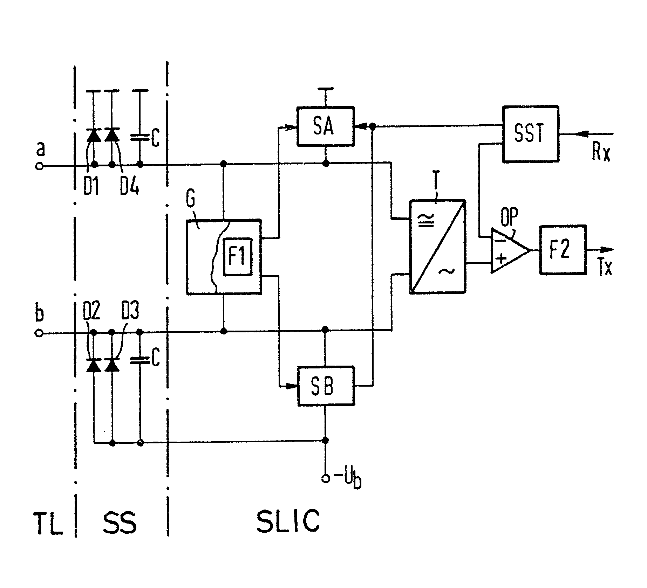

In der Figur ist im zum Verständnis der Erfindung erforderlichen Umfang eine Schnittstellenschaltung SLIC dargestellt, die den amtsseitigen Abschluss einer Analogsignale zwischen einer Teilnehmerstation und einer Fernsprechvermittlungsstelle übertragenden, die Adern a und b aufweisenden Teilnehmeranschlussleitung TL darstellt.

Der Schnittstellenschaltung ist eine Schutzschaltung SS zugeordnet, die im wesentlichen aus an die Adern der Teilnehmeranschlussleitung angeschlossene Dioden D1 bis D4 besteht, die durch die von der Schnittstellenschaltung her gelieferte Speisespannung für die an die Teilnehmeranschlussleitung angeschlossene, hier nicht dargestellte Teilnehmerstation in Sperrichtung vorgespannt sind un bei Autreten von Überspannungen umgepolt und damit leitend werden, womit eine zu Zerstörungen führende Beeinflussung von Halbleiterschaltelementen innerhalb der Schnittstellenschaltung vermieden wird.

Von der Schnittstellenschaltung SLIC ist hier im wesentlichen nur der der Teilnehmerspeisung dienende Teil dargestellt, an den sich ein Sende- und Empfangsfilter, sowie eine Schaltungsanordnung zur Analog-Digitalwandlung bzw. Digital-Analog-Wandlung (Codec) anschliessen.

Zur Teilnehmerspeisung enthält die Schnittstellenschaltung eine Speiseschaltung SA, die zwischen den Polen der Speisebatterie angeschlossen ist und die a-Ader der Teilnehmeranschlussleitung speist, sowie eine Speiseschaltung SB, die ebenfalls zwischen den Polen der Speisebatterie angeschlossen ist und die b-Ader der Teilnehmeranschlussleitung speist. Die beiden Speiseschaltungen SA und SB stehen unter dem Steuereinfluss einer Sprachsignalsteuerung SST, der von der Amtsseite her über den Eingang Rx die Sprachsignale zugeführt werden, die zu der an die Teilnehmeranschlussleitung angeschlossene Teilnehmerstation zu übertragen sind. Die Speiseschaltungen werden ferner von einer an die Adern a und b angeschlossenen Schaltung G zur Gleichtaktregelung im unterhalb des Fernsprechübertragungsbandes liegenden Frequenzbereich beeinflusst, was durch ein Tiefpassfilter F1 dieser Schaltungsanordnung veranschaulicht ist.

Die Schnittstellenschaltung weist ferner eine Schaltungsanordnung T auf, die an die Adern a und b der Teilnehmeranschlussleitung angeschlossen ist und zur Abtrennung des Gleichspannungsanteils der Gegentakt-Wechselspannungssignale dient, die ihr über die Teilnehmeranschlussadern zugeführt werden. Die genannten Wechselspannungsanteile gibt diese Schaltungsanordnung an einen Verstärker OP weiter, an dessen anderen Eingang von der Sprachsteuerung SST gelieferte Signale gelangen, die von der Amtsseite her über den Eingang Rx kommenden Sprachsignalen abgeleitet sind, um eine Gabelfunktion zu erreichen, also zu verhindern, dass die vom Eingang Rx über die Ansteuerung der Speiseschaltung SA und SB auf die Adern der Teilnehmeranschlussleitung gelangenden Sprachsignale wieder über den Ausgang des Verstärkers OP, dessen Ausgang zum sendeseitigen Vierdrahtzweig der Vermittlungsstelle führt, abgegeben werden.

An den Ausgang des genannten Operationsverstärkers OP ist ein Filter F2 angeschlossen, das Wechselspannungssignale, die in einem Frequenzbereich unterhalb von 300 Hz liegen, unterdrückt. Die Funktion dieses Filters F2 kann, wie angedeutet, auch das nicht dargestellte Sendefilter der Schnittstellenschaltung übernehmen, das der Anordnung zur Analog-Digital-Wandlung der Schnittstellenschaltung zugeordnet ist. Wenn nun also von benachbarten Versorgungsleitungen auf die Teilnehmeranschlussleitung TL Längsspannungen induziert werden, von denen nur die im Frequenzbereich unterhalb von 300 Hz liegenden Anteile mit grösserer Amplitude auftreten, wird durch die Gleichtaktregelung G eine niederohmige Ableitung der resultierenden Längsströme über die Speiseschaltung Sa und Sb nach Erde bzw. zur Speisebatterie bewirkt. Wegen der Unsymmetrie der Stromkreise für die Längsströme, die insbesondere die Leitungswiderstände der Teilnehmeranschlussleitung neben den durch die Speiseschaltungen SA und SB gebildeten Ableitwiderständen enthalten, wobei letztere in diesem Falle relativ niederohmig sind, entstehen hierdurch zwar Geräuschspannungen, die sich den auf der Teilnehmeranschlussleitung ankommenden Sprachsignalen überlagern, die

5 0105184 6

jedoch durch die Wirkung des Filters F2 auf dem Signalweg unterdrückt werden. Andererseits ist die in diesem Frequenzbereich vorhandene Gefahr, dass sich aufgrund der Längsspannungen Spannungshübe aufbauen, die die Schutzschaltung SS zum Ansprechen bringen, durch die niederohmige Ableitung der Längsströme vermieden.

Im Bereich oberhalb von 300 Hz, in dem die entsprechende Einflussnahme der Speiseschaltungen SA und SB durch die Gleichtaktregelung G wegfällt, bilden diese Speiseschaltungen hochohmige Ableitwiderstände, so dass die Längsströme und damit auch die Längsstromdifferenzen ausreichend klein sind, um nicht störend zu wirken. Wegen der geringen Amplituden der Längsspannungen in diesem Frequenzbereich ist auch nicht mit einem Ansprechen der Schutzschaltung, was zu Übertragungsstörungen führen würde, zu rechnen.

## Patentansprüche

1. Schaltungsanordnung zur Verringerung von Geräuschspannungen, die durch Ströme hervorgerufen werden, die aufgrund von Längsinduktionen auf den Adern (a, b) einer analogen Teilnehmeranschlussleitung (TL) fliessen, die über eine elektronische Schnittstellenschaltung (SLIC) an eine digitale Fernsprechvermittlungsstelle angeschlossen ist, wobei die Schnittstellenschaltung niederohmige Ableitpfade für die Längsströme aufweist, die über durch eine Gleichtaktregelschaltung (G) beeinflusste Konstantstromquellen (SA, SB) für die Speisung der Teilnehmeranschlussleitung (TL) führen, und die ihrerseits durch eine Schutzschaltung (SS) gegenüber Spannungen geschützt sind, und wobei zwischen der Teilnehmeranschlussleitung (TL) und dem Sendezweig der Vermittlungsstelle ein Bandpassfilter (F2) liegt, dadurch gekennzeichnet, dass die Ableitpfade durch die Gleichtaktregelschaltung (G) derart beeinflusst werden, dass diese nur im unterhalb des Fernsprechübertragungsbandes liegenden Frequenzbereich niederohmig, in und evtl. über diesem Fernsprechübertragungsband jedoch hochohmig sind, und dass die Dämpfung des Bandpassfilters (F2) unterhalb des Fernsprechübertragungsbandes so gross ist, dass in diesem Frequenzbereich auftretende Längsspannungen in ausreichendem Masse unterdrückt werden.

2. Schaltungsanordnung nach Patentanspruch 1, dadurch gekennzeichnet, dass als Filter das dem Analog-Digital-Wandler der Schnittstellenschaltung (SLIC) zugeordnete Sendefilter verwendet ist.

## Claims

1. A circuit arrangement for the reduction of noise voltages which are produced by currents which flow as a result of series inductances on the wires (a, b) of an analogue subscriber connection line (TL) which is connected via an electronic interface circuit (SLIC) to a digital telephone exchange, where the interface circuit is provided with low-ohmic shunt paths for the series currents, which paths extend via constant current sources (SA, SB) – influenced by a common-mode regulating circuit (G) – for the supply of the subscriber connection line (TL) and which are themselves protected from voltages by a protective circuit (SS),and where a band-pass filter (F2) is arranged between the subscriber connection line (TL) and the transmitting arm of the exchange, characterised in that the shunt paths are influenced by the common-mode regulating circuit (G) in such manner that they are low-ohmic only in the frequency range below the telephone transmission band whereas they are high-ohmic in and where appropriate above this telephone transmission band, and that the attenuation of the band-pass filter (F2) below the telephone transmission band is such that series voltages occurring in this frequency range are adequated suppressed.

2. A circuit arrangement as claimed in claim 1, characterised in that the transmitting filter which is assigned to the analogue-digital converter of the interface circuit (SLIC) is used as a filter.

## Revendications

1. Montage pour réduire les tensions de bruit, qui sont provoquées par des courants qui circulent, en raison de la présence d'inductions longitudinales, dans les conducteurs (a, b) d'une ligne analogique d'abonné (TL) qui est raccordée par l'intermédiaire d'un circuit d'interface électronique (SLIC) à un central téléphonique numérique, et dans lequel le circuit d'interface comporte des voies de dérivation pour les courants longitudinaux, qui s'étendent en passant par des sources de courant constant (SA, SB) influencées par un circuit de régulation en mode commun (G) et servant à alimenter la ligne d'abonné (DL) et qui, pour leur part, sont protégées par un circuit de protection (SS) vis-à-vis de tensions, et dans lequel un filtre passe-bande (F2) est branché entre la ligne d'abonné (TL) et la branche d'émission du central, caractérisé par le fait que les voies de dérivation sont influencées par le circuit (G) de régulation en mode commun de telle sorte que ces voies présentent une faible valeur ohmique uniquement dans la plage des fréquences se situant au-dessous de la bande de transmission téléphonique, mais possèdent une forte valeur ohmique dans et éventuellement au-dessus de cette bande de transmission téléphonique, et que l'affaiblissement produit par le filtre passe-bande (F2) au-dessous de la bande de transmission téléphonique est suffisamment élevée pour que des tensions longitudinales apparaissant dans cette plage de fréquences soient supprimées à un degré suffisant.

2. Montage suivant la revendication 1, caracté-

7　　　　　　0 105 184　　　　　　8

risé par le fait qu'on utilise en tant que filtre, le filtre d'émission associé à un dispositif de conversion analogique/numérique du circuit d'interface (SLIC).